# NEUE EUROPÄISCHE PATENTSCHRIFT

(11) **EP 1 607 649 B2**
(45) Veröffentlichungstag und Bekanntmachung des Hinweises auf die Entscheidung über den Einspruch: **17.10.2012**
(45) Hinweis auf die Patenterteilung: 13.06.2007
(21) Anmeldenummer: 04014167.3
(22) Anmeldetag: 17.06.2004
(51) Int. Cl.: F16D 25/10, F16D 25/12

(54) **Rückenplatte für eine Doppelkupplung in axial paralleler Bauart**
Backplate for an axially arranged double clutch
Plaque arrière pour embrayage double du type parallèle

(43) Veröffentlichungstag der Anmeldung: 21.12.2005
(73) Patentinhaber: BorgWarner, Inc., Auburn Hills, MI 48326-2872 (US)
(72) Erfinder: Heinrich, Johannes, Dr., 61381 Friedrichshof (DE)
(74) Vertreter: Patentanwälte Westphal, Mussgnug & Partner

(56) Entgegenhaltungen:
- EP-A- 1 195 537
- DE-A1- 2 342 940
- DE-B- 1 146 314
- US-A- 3 040 408
- US-A- 3 099 166
- US-A- 3 362 481

## Beschreibung

Die Erfindung betrifft eine Doppelkupplung in axial paralleler Bauart gemäß Patentanspruch 1.

Bei Doppelkupplungen in sogenannter axial paralleler Anordnung, wie sie beispielsweise in der EP 1 195 537 B1 oder der europäischen Patentanmeldung No. 03023013.0 beschrieben sind, werden üblicherweise zwei Lamellenpakete unabhängig voneinander von außen her gegen eine gemeinsame Rücken- oder Endplatte (in der Fachsprache wird diese auch als "Backing Plate" bezeichnet) gedrückt.

Sowohl in der europäischen Patentschrift EP 1 195 537 B1 als auch in EP 1 622 753 sind Doppelkupplungen in axial paralleler Bauart beschrieben, welche jeweils eine einstückig mit dem Innenlamellenträger verbundene Rückenplatte aufweisen. Eine derartige Konstruktion ist relativ teuer in der Herstellung.

Die Unterlagen zur europäischen Patentanmeldung No. 03023013.0 offenbaren weiter, dass die Rückenplatte nicht einstückig mit dem Innenlamellenträger verbunden sein muss, sondern auch starr mit dem Innenlamellenträger verbunden oder axial an dem Innenlamellenträger fixiert oder einseitig axial beanschlagt sein kann.

Weiterhin offenbart die US 3,040,408 eine Doppelkupplung, bei welcher die Betätigungskolben einzelner Kupplungen miteinander verbunden sind, sodass deren Lamellenpakete abhängig voneinander gegen Kupplungstrommeln geführt werden.

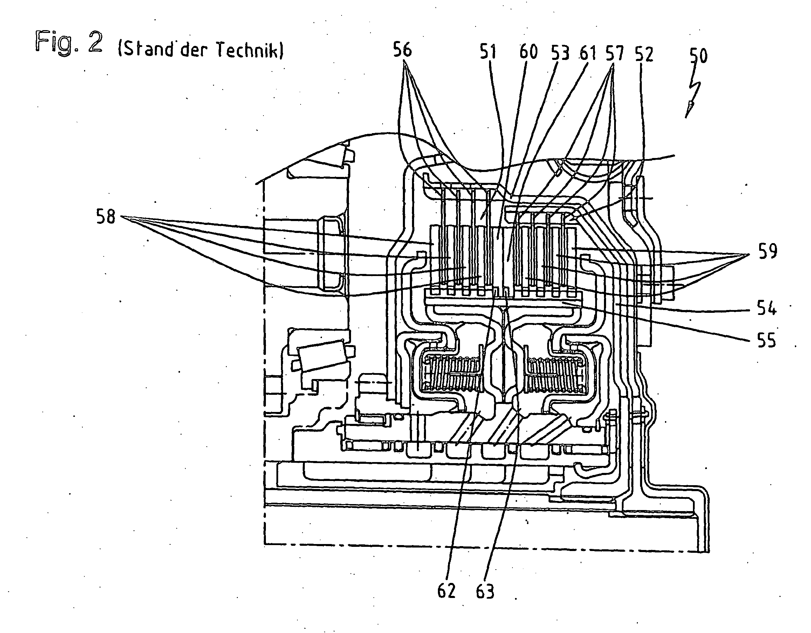

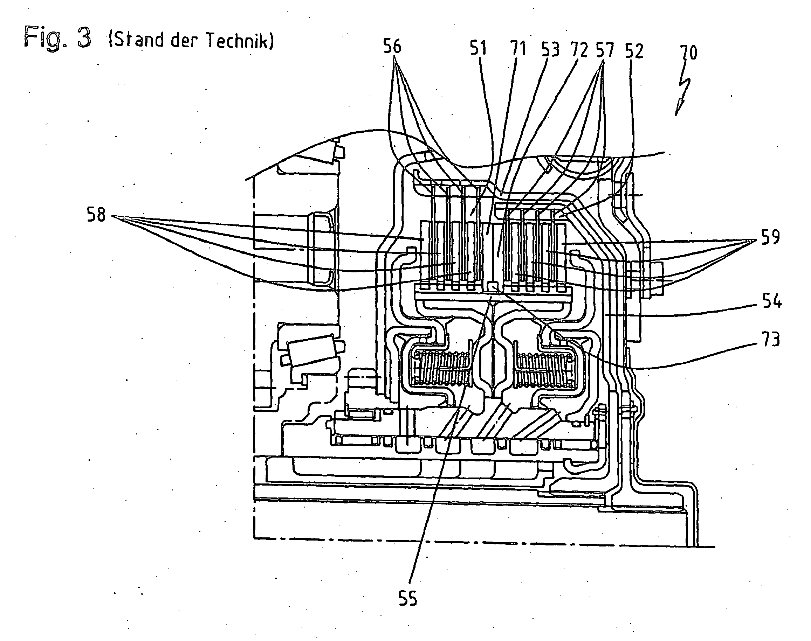

Kostengünstige Lösungen, bei denen die gegen die entsprechenden Rückenplatten wirkenden Axialkräfte gegen mindestens einen Sprengring abgestützt werden entnimmt man den Figuren 2 und 3.

So zeigt die Figur 2 eine aus dem betriebsinternen Stand der Technik bekannte Doppelkupplung 50 in axial paralleler Bauart mit zwei jeweils gegen einen Sprengring axial abgestützten Rückenplatten.

Die Doppelkupplung 50 umfasst zwei in einem Kupplungsgehäuse angeordnete Einzelkupplungen 51, 52, welche eine Antriebswelle schaltbar mit jeweils einer von zwei koaxial zueinander angeordneten Abtriebswellen verbinden.

Jede Einzelkupplung 51, 52 umfasst jeweils einen Außenlamellenträger 53, 54 und einen gemeinsamen Innenlamellenträger 55. Die beiden Außenlamellenträger 53, 54 sind halbschalenförmig ausgebildet, wobei der erste Außenlamellenträger 53 den zweiten Außenlamellenträger 54 in axialer Richtung überragend umgreift. Der Innenlamellenträger 55 weist eine im Wesentlichen zylinderförmige Gestalt auf und erstreckt sich über die axial verlaufenden Bereiche der Halbschalen 53, 54.

Die beiden Außenlamellenträger 53, 54 weisen Innenverzahnungen auf, welche zur axial verschieblichen aber im Wesentlichen drehfesten Führung von im vorliegenden Fall jeweils vier entsprechende Außenverzahnungen aufweisenden Reiblamellen 56, 57 dienen.

In entsprechender Weise sind am Außenumfang der den jeweiligen Außenlamellenträgern 53, 54 zugeordneten Innenlamellenträgerabschnitten des gemeinsamen Innenlamellenträgers 55 Außenverzahnungen angeordnet, in denen Innenverzahnungen aufweisende Stahllamellen 58, 59 axial verschieblich aber drehfest geführt sind. Die beiden Innenlamellenträgerabschnitte werden durch zwei End- oder Rückenplatten 60, 61 voneinander getrennt.

Jeder Rückenplatte 60, 61 ist ein entsprechender Sprengring 62, 63 zugeordnet, welcher die jeweilige Rückenplatte 60, 61 axial in einer Richtung beanschlagt. Bei der in dieser Figur 2 dargestellten Ausführungsvariante stützen sich die Axialkräfte der rechten Einzelkupplung 52 gegen beide Rückenplatten 60, 61 ab. Die Axialkräfte der linken Einzelkupplung 51 werden nur über die linke Rückenplatte 60 gegen den rechten Sprengring 63 abgestützt. Die rechte Rückenplatte 61 und der linke Sprengring 62 sind in diesem Falle unbelastet.

Aus dem betriebsinternen Stand der Technik ist auch eine in der Figur 3 dargestellte Bauart bekannt. Bei dieser Doppelkupplung 70, welche weitgehend identisch, wie die gemäß der Figur 2 ausgeführt ist (in identischer Weise vorliegende Bestandteile wurden daher in beiden Figuren mit gleichen Bezugszeichen versehen), stützen sich zwei Rückenplatten 71, 72 gegen einen Sprengring 73 in der Mitte ab.

Nachteilig bei diesen Lösungen ist die relativ geringe Steifigkeit der Rückenplatten, welche proportional zur dritten Potenz der Scheibendicke ist. Bei geringer Steifigkeit führt die Verformung der Rückenplatte dazu, dass die Kupplungslamellen, welche nahe der Rückenplatten liegen, nur sehr ungleichmäßig tragen.

Die Aufgabe der Erfindung liegt nunmehr darin, eine Doppelkupplung in axial paralleler Anordnung vorzustellen, welche kostengünstig herstellbar, einfach montierbar ist und eine hohe Steifigkeit aufweist.

Diese Aufgabe wird durch eine Doppelkupplung in axial paralleler Anordnung durch die Merkmale des Patentanspruchs 1 gelöst.

Vorteilhafte Ausführungen und Weiterbildungen der Erfindung sind in den Unteransprüchen angegeben.

Erfindungsgemäß ist am Innenumfang oder am Außenumfang eine wenigstens teilweise umlaufende Nut vorgesehen. In diese Nut kann ein federndes Element, insbesondere ein Sprengring oder dergleichen, eingesetzt werden, welches in eine entsprechende Nut an einem die Rückenplatte tragenden Lamellenträger eingreift. Dadurch wird die Rückenplatte am Lamellenträger unverlierbar festgehalten.

Die Erfindung lässt sich sowohl zur axialen Fixierung einer Rückenplatte an einem (für beide Einzelkupplungen gemeinsamen) Außenlamellenträger als auch an einem (gemeinsamen) Innenlamellenträger einer Doppelkupplung in axial paralleler Anordnung einsetzen. Zur Fixierung einer Rückenplatte an einem Innenlamellenträger ist die wenigstens teilweise umlaufende Nut in den Innenumfang der Rückenplatte eingeformt. Der Innenlamellenträger weist hierzu korrespondierend an seinem Außenumfang eine entsprechend eingebrachte Nut auf. Zur Fixierung einer Rückenplatte an einem Außenlamellenträger ist die wenigstens teilweise umlaufende Nut in den Außenumfang der Rückenplatte eingeformt. Der Außenlamellenträger weist hierzu korrespondierend an seinem Innenumfang eine entsprechend eingebrachte Nut auf. In die jeweiligen korrespondierenden Nuten ist ein federndes Element, z.B. ein Sprengring oder dergleichen, einsetzbar, welches die Rückenplatte gegenüber (gemeinsamem) Außen- bzw. Innenlamellenträger axial im wesentlichen unverschieblich hält.

Da insbesondere der Sprengring bei Rotation der Kupplung stets fliehkraftbedingt nach außen gedrückt wird, ist es günstig, wenn der Sprengring auch in nicht rotierendem Zustand der Kupplung unter innerer Spreizkraft nach außen drückt. Dies gilt unabhängig davon, ob die Doppelkupplung einen gemeinsamen Innenlamellenträger oder einen gemeinsamen Außenlamellenträger aufweist.

Um zu verhindern, dass sich die Rückenplatte axial verschiebt, wenn sich der Sprengring fliehkraftbedingt spreizt, ist erfindungsgemäß vorgesehen, dass im Falle des gemeinsamen Innenlamellenträgers die Tiefe der Nut in der Rückenplatte so bemessen ist, dass der Sprengring im montierten Zustand bei maximaler Spreizung innenumfangsseitig in die Nut im Innenlamellenträger hineinragt. Für den Fall der Fixierung der gemeinsamen Rückenplatte an einem gemeinsamen Außenlamellenträgers ist erfindungsgemäß vorgesehen, dass die Tiefe der Nut im Außenlamellenträger so bemessen ist, dass der Sprengring im montierten Zustand bei maximaler Spreizung innenumfangsseitig in die Nut in der Rückenplatte hineinragt. Auf diese Weise stellt der Sprengring stets sowohl für die Rückenplatte als auch für den entsprechenden Lamellenträger einen axialen Anschlag dar.

Um sicherzustellen, dass die Rückenplatte am entsprechenden Lamellenträger fixiert werden kann, ist es erforderlich, dass sich der Sprengring (welcher exemplarisch für alle sonstigen Arten an federnden Elementen genannt ist) in einer der Nuten komplett versenken lässt, so dass Rückenplatte und Lamellenträger axial gegeneinander verschoben werden können. Im Fall des gemeinsamen Außenlamellenträgers ist daher erfindungsgemäß vorgesehen, dass die am Außenumfang der Rückenplatte vorgesehne Nut so bemessen ist, dass sich der Sprengring unter radialer Kompression in diese Nut hineindrücken lässt und zwar wenigstens so weit, dass der Außenlamellenträger über den Sprengring geschoben werden kann, bis die beiden korrespondierenden Nuten übereinander liegen wo sich der Sprengring unter Eigenspannung spreizt und dadurch in die Nut im gemeinsamen Außenlamellenträger eingreift. In entsprechender Weise ist im Fall des gemeinsamen Innenlamellenträgers die am Außenumfang des Innenlamellenträgers umlaufende Nut so bemessen, dass sich der Sprengring unter radialer Kompression in diese Nut hineindrücken lässt und zwar wenigstens so weit, dass die Rückenplatte über den Sprengring geschoben werden kann, bis die beiden korrespondierenden Nuten übereinander liegen wo sich der Sprengring unter Eigenspannung spreizt und dadurch in die Nut in der Rückenplatte eingreift.

Die Erfindung wird nunmehr anhand der Zeichnung eingehend beschrieben. Es zeigt:
- Figur 1: ein Ausführungsbeispiel einer an einem Innenlamellenträger axial fixierten erfindungsgemäßen Rückenplatte
- Figur 2: ein erstes Ausführungsbeispiel einer Doppelkupplung in axial paralleler Anordnung mit herkömmlich beanschlagten Rückenplatten (Stand der Technik)
- Figur 3: ein zweites Ausführungsbeispiel einer Doppelkupplung in axial paralleler Anordnung mit herkömmlich beanschlagten Rückenplatten (Stand der Technik)

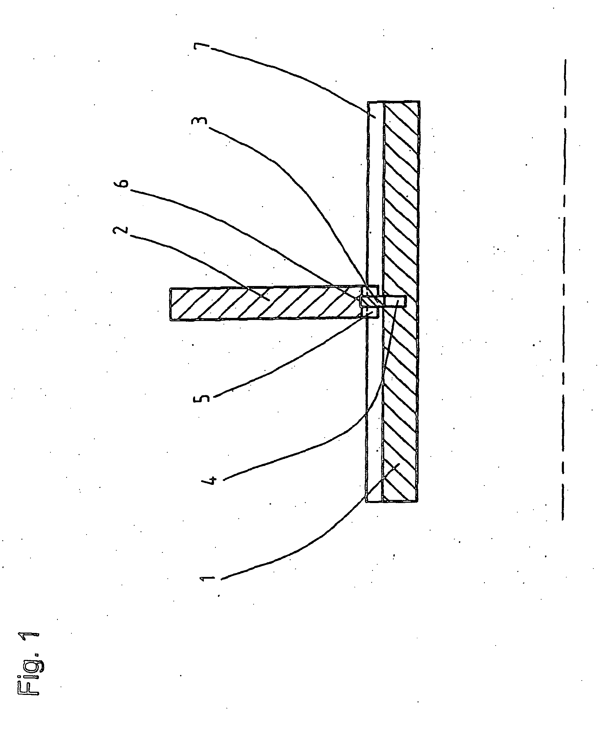

Die Figur 1 zeigt ein Ausführungsbeispiel einer an einem Innenlamellenträger 1 axial fixierten erfindungsgemäßen Rückenplatte 2.

Die erfindungsgemäße Rückenplatte 2 weist an ihrem Innenumfang eine umlaufende Nut 6 auf. Korrespondierend hierzu weist der Innenlamellenträger 1 an seinem Außenumfang eine umlaufende Nut 4 auf. In den Nuten 4, 6 befindet sich ein Sprengring 3. Dieser Sprengring 3 stützt sich außenumfangsseitig gegen den Nutboden der Nut 6 in der Rückenplatte 2 ab. Auf diese Weise ist die Rückenplatte 2 auf dem Innenlamellenträger 1 axial fixiert. Ein Drehmoment durch Reibungskräfte an der Rückenplatte 2 wird über korrespondierende Verzahnungen 5, 7 in Rückenplatte 2 und Innenlamellenträger 1 auf den Innenlamellenträger 1 übertragen.

Die Rückenplatte 2 wird auf dem Innenlamellenträger 1 wie folgt montiert:

Zunächst wird der Sprengring 3 über den Innenlamellenträger 1 geschoben. Der Sprengring 3 kann dabei eine geringe Federspannung gegen den Außenumfang des Innenlamellenträgers 1 ausüben, so dass er ohne äußere Krafteinwirkung in die Nut 4 im Innenlamellenträger 1 springt und dadurch in axialer Richtung fixiert ist.

Danach wird der Sprengring 3 durch äußere Krafteinwirkung weiter in die Nut 4 hineingedrückt, so dass die Rückenplatte 2 (aufgrund korrespondierender Verzahnungen 5, 7 verdrehgesichert) über den Sprengring 3 geschoben werden kann. Die Tiefe der Nut 4 muss so groß sein, dass die radiale Luft unter dem Sprengring 3 im montierten Zustand größer als die Nuttiefe in der Rückenplatte 2 ist. Liegen die Nuten 4 und 6 in Sprengring 3 und Innenlamellenträger 1 bei einer vorbestimmten axialen Position radial übereinander, springt der Sprengring 3 auf, so dass er die Rückenplatte 2 unverlierbar festhält. Fliehkrafteffekte bei höheren Drehzahlen unterstützen diese Wirkung.

Vorteil der dicken Rückenplatte 2 ist die hohe Steifigkeit. Diese ist proportional zur dritten Potenz der Dicke der Rückenplatte. Wenn man annimmt, dass die Steifigkeit einer einzelnen Rückenplatte 60, 61 entsprechend dem Ausführungsbeispiel nach der Figur 2 den Bezugswert "1" hat, so weisen beide Rückenplatten 60, 61 in Belastungsrichtung nach rechts den Wert "1" auf (linke Rückenplatte 60 stützt sich gegen rechten Sprengring 63 ab, rechte Rückenplatte 61 ist frei). Bei Belastungsrichtung nach links hat die Gesamtsteifigkeit den Wert "2". Hierzu stützt sich die linke Rückenplatte 60 gegen den linken Sprengring 62 ab; die rechte Rückenplatte 61 stützt sich gegen die linke Rückenplatte 60 ab. Zum rechten Sprengring 63 muss diese Rückenplatte 60 hierfür etwas Axialspiel haben, damit sie nicht dort anliegt. Andernfalls läge auch bei dieser Belastungsrichtung nur die Steifigkeit "1" vor.

Die erfindungsgemäße Rückenplatte 2 gemäß Figur 1 hingegen weist - bei doppelter Dicke einer Einzelplatte 60, 61 - den Steifigkeitswert "8" auf, ist also 4 bis 8 mal so steif, wie die Rückenplatten 60, 61 in Figur 2.

Normalerweise sind diese Verbindungen nicht mehr lösbar, d.h. mit einer verschweißten Platte vergleichbar.

Ein Lösen ist schwierig, da hierzu der Sprengring wieder gegen seine eigene Spreizkraft nach innen gedrückt werden müsste. Es ist jedoch denkbar, die Rückenplatte mit radialen Bohrungen zu versehen, durch welche hindurch der Sprengring mit geeigneten Stäben nach Innen gedrückt wird. Somit wäre auch eine Demontage realisierbar.

### Bezugszeichenliste

- 1: Innenlamellenträger
- 2: Rückenplatte
- 3: Sprengring
- 4: Umlaufende Nut in Innenlamellenträger
- 5: Verzahnung in Rückenplatte
- 6: Umlaufende Nut in Rückenplatte
- 7: Verzahnung in Innenlamellenträger

- 50: Doppelkupplung
- 51: Einzelkupplung
- 52: Einzelkupplung
- 53: Außenlamellenträger
- 54: Außenlamellenträger
- 55: Innenlamellenträger
- 56: Reiblamelle
- 57: Reiblamelle
- 58: Stahllamelle
- 59: Stahllamelle
- 60: Rückenplatte
- 61: Rückenplatte
- 62: Sprengring
- 63: Sprengring

- 70: Doppelkupplung
- 71: Rückenplatte
- 72: Rückenplatte
- 73: Sprengring

## Patentansprüche

1. Doppelkupplung in axial paralleler Bauart, bei der zwei Lamellenpakete unabhängig voneinander von außen her gegen eine gemeinsame Rückenplatte gedrückt werden, wobei die Rückenplatte (2) am Innenumfang oder am Außenumfang eine wenigstens teilweise umlaufende Nut (6) aufweist, in welcher ein federndes Element, insbesondere ein Sprengring (3), einsetzbar ist,
und wobei
ein gemeinsamer Innenlamellenträger (1) zur axialen Fixierung der Rückenplatte (2) vorgesehen ist, welcher eine zu der am Innenumfang wenigstens teilweise umlaufenden Nut (6) der Rückenplatte (2) korrespondierende außenumfangsseitig wenigstens teilweise umlaufende Nut (4) aufweist, wobei in die Nut (6) der Rückenplatte (2) und in die Nut (4) des Innenlamellenträgers (1) das federndes Element, insbesondere der Sprengring (3), eingesetzt ist oder
ein gemeinsamer Außenlamellenträger zur axialen Fixierung der Rückenplatte vorgesehen ist, welcher eine zu der am Außenumfang wenigstens teilweise umlaufenden Nut der Rückenplatte korrespondierende innenumfangsseitig wenigstens teilweise umlaufende Nut aufweist, wobei in die Nut der Rückenplatte und in die Nut des Außenlamellenträgers ein federndes Element, insbesondere ein Sprengring, eingesetzt ist.

2. Doppelkupplung nach Anspruch 1,
**dadurch gekennzeichnet, dass**
im Falle des gemeinsamen Innenlamellenträgers (1) die Tiefe der Nut (6) in der Rückenplatte so bemessen ist, dass das federnde Element, insbesondere der Sprengring (3), im montierten Zustand bei maximaler Spreizung innenumfangsseitig in die Nut (4) im Innenlamellenträger (1) hineinragt oder dass
im Falle des gemeinsamen Außenlamellenträgers die Tiefe der Nut im Außenlamellenträger so bemessen ist, dass das federnde Element, insbesondere der Sprengring, im montierten Zustand bei maximaler Spreizung innenumfangsseitig in die Nut in der Rückenplatte hineinragt.

3. Doppelkupplung nach einem der Ansprüche 1 oder 2,
**dadurch gekennzeichnet, dass**
im Falle des gemeinsamen Innenlamellenträgers (1) die am Innenumfang des Innenlamellenträgers (1) umlaufende Nut (4) so bemessen ist, dass sich das federnde Element, insbesondere der Sprengring (3), unter radialer Kompression in diese Nut (4) hineindrücken lässt und zwar wenigstens so weit, dass sich die Rückenplatte (2) über das federnde Element, insbesondere den Sprengring (3), schieben lässt, bis die beiden korrespondierenden Nuten (4, 6) übereinander liegen wo sich das federnde Element, insbesondere der Sprengring (3), unter Eigenspannung spreizt und dadurch in die Nut (6) in der Rückenplatte eingreift oder dass
im Fall des gemeinsamen Außenlamellenträgers die am Außenumfang der Rückenplatte vorgesehene Nut so bemessen ist, dass sich das federnde Element, insbesondere der Sprengring, unter radialer Kompression in diese Nut hineindrücken lässt und zwar wenigstens so weit, dass der Außenlamellenträger über das federnde Element, insbesondere den Sprengring, geschoben werden kann, bis die beiden korrespondierenden Nuten übereinander liegen wo sich das federnde Element, insbesondere der Sprengring, unter Eigenspannung spreizt und dadurch in die Nut im gemeinsamen Außenlamellenträger eingreift.

## Claims

1. Dual clutch of an axially parallel design, in which two plate packs are pressed, independently of one another, from the outside against a common back plate, wherein at the inner circumference or at the outer circumference the back plate (2) has an at least partial circumferential groove (6), in which a spring element, in particular a snap ring (3), is insertable, and wherein for axially fixing the back plate (2) a common inner disc carrier (1) is provided, which has a groove (4) extending at least partially around the outer circumference and corresponding to the groove (6) of the back plate (2) that extends at least partially around the inner circumference, wherein the spring element, in particular the snap ring (3) is inserted into the groove (6) of the back plate (2) and into the groove (4) of the inner disc carrier (1) or
for axially fixing the back plate a common outer disc carrier is provided, which has a groove extending at least partially around the inner circumference and corresponding to the groove of the back plate that extends at least partially around the outer circumference, wherein a spring element, in particular a snap ring, is inserted into the groove of the back plate and into the groove of the outer disc carrier.

2. Dual clutch according to claim 1,
**characterized in that**,
in the case of the common inner disc carrier (1), the depth of the groove (6) in the back plate is so dimensioned that the spring element, in particular the snap ring (3), in the fitted state with maximum spread projects at the inner circumference side into the groove (4) in the inner disc carrier (1) or that, in the case of the common outer disc carrier, the depth of the groove in the outer disc carrier is so dimensioned that the spring element, in particular the snap ring, in the fitted state with maximum spread projects at the inner circumference side into the groove in the back plate.

3. Dual clutch according to one of claims 1 or 2,
**characterized in that**,
in the case of the common inner disc carrier (1), the groove (4) extending around the inner circumference of the inner disc carrier (1) is so dimensioned that the spring element, in particular the snap ring (3), may be pressed under radial compression into said groove (4), namely at least to such an extent that the back plate (2) may be pushed via the spring element, in particular the snap ring (3), until the two corresponding grooves (4, 6) mutually overlap where the spring element, in particular the snap ring (3), spreads under residual stress and therefore engages into the groove (6) in the back plate or that,
in the case of the common outer disc carrier, the groove provided at the outer circumference of the back plate is so dimensioned that the spring element, in particular the snap ring, may be pressed under radial compression into said groove, namely at least to such an extent that the outer disc carrier may be pushed via the spring element, in particular the snap ring, until the two corresponding grooves mutually overlap where the spring element, in particular the snap ring, spreads under residual stress and therefore engages into the groove in the common outer disc carrier.

## Revendications

1. Embrayage double de type parallèle axial, dans lequel deux paquets de lamelles sont pressés indépendamment l'un de l'autre depuis l'extérieur contre une plaque arrière commune, la plaque arrière (2) présentant sur la périphérie intérieure ou sur la périphérie extérieure, une gorge (6) faisant au moins partiellement le pourtour, gorge dans laquelle peut être inséré un élément élastique, en particulier un circlip (3), et un support de lamelles intérieur (1) commun étant prévu pour la fixation axiale de la plaque arrière (2), support présentant une gorge (4), faisant au moins partiellement le pourtour, du côté de la périphérie extérieure, correspondant à la gorge (6) faisant au moins partiellement le pourtour sur la périphérie intérieure de la plaque arrière (2), sachant que, dans la gorge (6) de la plaque arrière (2) et dans la gorge (4) du support de lamelles intérieur (1), est inséré l'élément élastique, en particulier le circlip (3), ou, pour la fixation axiale de la plaque arrière, étant prévu un support de lamelles extérieur commun, qui présente une gorge faisant au moins partiellement le pourtour du côté de la périphérie intérieure, correspondant à la gorge faisant au moins partiellement le pourtour sur la périphérie extérieure de la plaque arrière (2), sachant qu'un élément élastique, en particulier un circlip, est inséré dans la gorge de la plaque arrière et dans la gorge du support de lamelles extérieur.

2. Embrayage double selon la revendication 1, **caractérisé en ce que**, dans le cas du support de lamelles intérieur (1) commun, la profondeur de la gorge (6) ménagée dans la plaque arrière est de valeur telle que l'élément élastique, en particulier le circlip (3), à l'état monté, lorsque l'écartement est maximal, pénètre du côté de la périphérie intérieure dans la gorge (4) ménagée dans le support de lamelles intérieur (1), ou **en ce que**,
dans le cas du support de lamelles extérieur commun, la profondeur de la gorge ménagée dans le support de lamelles extérieur est de valeur telle que l'élément élastique, en particulier le circlip, à l'état monté, lorsque l'écartement est maximal, pénètre côté périphérie intérieure dans la gorge ménagée dans la plaque arrière.

3. Embrayage double selon l'une des revendications 1 ou 2, **caractérisé en ce que**, dans le cas du support de lamelles intérieur (1) commun, la gorge (4) faisant le pourtour, sur la périphérie intérieure du support de lamelles intérieur (1) est dimensionnée de façon que l'élément élastique, en particulier le circlip (3), peut être enfoncé sous compression radiale dans cette gorge (4) et, précisément, au moins à un degré tel que la plaque arrière (2) puisse être coulissée sur l'élément élastique, en particulier le circlip (3), jusqu'à ce que les deux gorges (4, 6) se correspondant viennent se placer l'une sur l'autre, où l'élément élastique, en particulier le circlip (3), s'écarte sous l'effet d'une contrainte propre et, de ce fait, s'engage dans la gorge (6) ménagée dans la plaque arrière, ou **en ce que**, dans le cas du support de lamelles extérieur commun, la gorge prévue sur la périphérie extérieure de la plaque arrière est dimensionnée de telle façon que l'élément élastique, en particulier le circlip, puisse être enfoncé sous compression radiale dans cette gorge et, précisément, au moins à un degré tel que le support de lamelles extérieur puisse être coulissé sur l'élément élastique, en particulier le circlip, jusqu'à ce que les deux gorges se correspondant viennent se placer l'une sur l'autre, où l'élément élastique, en particulier le circlip, sous l'effet d'une contrainte propre s'écarte et, de ce fait, s'engage dans la gorge ménagée dans le support de lamelles extérieur commun.
